# EUROPÄISCHE PATENTANMELDUNG

(11) **EP 3 376 102 A1**
(43) Veröffentlichungstag der Anmeldung: **19.09.2018**
(21) Anmeldenummer: 18161347.2
(22) Anmeldetag: 13.03.2018
(51) Int. Cl.: F21V 31/04, B25G 1/00, B29C 39/00, B29C 39/14, B29C 39/18, B60N 3/02, B60Q 3/267, F21V 33/00, F21W 111/08, F21V 15/00, F21Y 115/10, F21Y 105/10, B29L 31/00, B29K 75/00, E04F 11/18

(54) **BELEUCHTETES KONSTRUKTIONSELEMENT UND VERFAHREN ZU DESSEN HERSTELLUNG**

(30) Priorität: 15.03.2017 DE 202017101493 U
(71) Anmelder: LDR-Rolltechnik GmbH & Co. KG, 94424 Arnstorf (DE)
(72) Erfinder: DOSTALEK, Ludwig, 94424 Arnstorf (DE)
(74) Vertreter: Reichert & Lindner Partnerschaft Patentanwälte

(57) **Zusammenfassung**

Beleuchtetes Konstruktionselement (1) umfassend einen Hohlkörper (3), der sich entlang einer Längsachse (A) erstreckt und mindestens eine Öffnung (5) aufweist; einen Träger (7) zur Aufnahme mindestens einer Lichtleiste (9), die mit mehreren Licht emittierenden Elementen (9L) bestückt ist; einer Aufnahme (8), die ein Teil des Trägers (7) ist, in der die Lichtleiste (9) montiert ist, wobei die Aufnahme (8) sich in Richtung der Längsachse (A) erstreckende Flächenelemente (13) aufweist, die mit einer Innenfläche (23) des Hohlkörpers (3) derart zusammenwirken, dass sich eine dichtende Wirkung in Richtung der Längsachse (A) parallel zu der mindestens einen Öffnung (5) ergibt; eine erste elastische und transparente Kunststoffmasse (4), mit der die Aufnahme (8) vergossen ist, und eine zweite elastische und transparente Kunststoffmasse (6), mit der die mindestens eine Öffnung (5) vergossen ist und stoffschlüssig mit der ersten elastischen und transparenten Kunststoffmasse (4) zusammenwirkt.

## Beschreibung

Die vorliegende Erfindung betrifft ein beleuchtetes Konstruktionselement. Das Konstruktionselement besteht aus einem Hohlkörper, der sich entlang einer Längsachse erstreckt. Ebenfalls ist in Richtung der Längsachse mindesten eine Öffnung im Hohlkörper ausgebildet durch die Licht austreten kann.

Ferner betrifft die Erfindung ein Verfahren zur Herstellung eines beleuchtbaren Konstruktionselements.

Die deutsche Patentanmeldung DE 10 2015 205 630 betrifft eine Abdeckungseinrichtung zur zumindest teilweisen Abdeckung einer Vertiefung, eines ebenen Abschnitts oder eines gewölbten Abschnitts eines Fahrzeugelements eines Fahrzeugs. Die Abdeckungseinrichtung weist eine Beleuchtungseinrichtung auf und ist derart ausgebildet, dass zumindest ein Abschnitt der Abdeckungseinrichtung mittels der Beleuchtungseinrichtung durchleuchtbar ist. Die Abdeckungseinrichtung weist dabei ein Leistenelement auf. Das Leistenelement ist mit jeweils wenigstens einem Lippenelement verbunden. Das Lippenelement 7 liegt In eingebautem Zustand am Karosseriebauteil an. Ein Schutz gegen Vandalismus oder eine gute Haptik ist nicht gegeben.

Das deutsche Gebrauchsmuster DE 20 2013 102 002 U1 offenbart eine beleuchtete Haltegriffanordnung für ein Fahrzeug. Der Griffkörper besitzt einen Mittenabschnitt und zwei gegenüberliegenden Enden. Der Griffkörper ist dazu ausgelegt ist, an einer Oberfläche des Fahrzeuginnenraums angebracht zu werden. Ferner ist mindestens eine Lichtquelle im Mittenabschnitt des Griffkörpers zum Beleuchten des Fahrzeuginnenraums angeordnet. Die beleuchtete Haltegriffanordnung enthält auch eine Linse zum Verstecken oder Verdecken der innen liegenden Komponenten und zur direkten Beleuchtung des Innenraums des Fahrzeugs mit der Lichtquelle. Die Linse ist bündig mit dem Griffkörper befestigt ist, um ein ästhetisch ansprechendes Erscheinungsbild bereitzustellen.

Das deutsche Gebrauchsmuster DE 20 2012 101 627 offenbart einen Hängeschrank. Der Zugang zum Schrankinnenraum wird durch eine Schranktür freigegeben, wobei an der Unterkante der Schranktür eine Profilleiste vorgesehen ist, in der mehrere LEDs angeordnet sind. Die Profilleiste hat im Wesentlichen einen U-förmigen Querschnitt, wobei an einer ebenen Montagefläche eine LED-Leiterplatine eingeklebt werden kann. Die Leiterplatine erstreckt sich nicht über die gesamte Länge der Profilleiste und ist mit LEDs versehen. Eine lichtdurchlässige Abdeckung kann an die Profilleiste geclipst werden. An ihren beiden Enden wird die Profilleiste mittels zweier Abdeckkappen verschlossen, so dass beispielsweise keine Insekten in den Zwischenraum zwischen den Leiterplatinen und der Abdeckung eindringen können.

Die deutsche Offenlegungsschrift DE10 2009 042 257 offenbart einen Handlauf für Geländer, Treppen, Absperrungen, Fluchtwege oder dergleichen. Der Handlauf besitzt ein längliches Handlaufprofil, welches in einer ersten, auf einer Unterseite verlaufenden Längsnut zumindest bereichsweise elektrische Leuchtmittel trägt. Unterhalb der ersten Längsnut ist eine weitere, zweite Längsnut platziert, welche zumindest bereichsweise eine Befestigung des Handlaufprofils in sich aufnimmt. Die erste Längsnut nimmt elektrische Leuchtmittel in Form eines LED-Bandes auf. Eine Klemmvorrichtung welche in der zweiten Längsnut befestigbar ist, deckt das LED-Band ab.

Der Erfindung liegt die Aufgabe zugrunde, ein beleuchtbares Konstruktionselement zu schaffen das gegen jegliche Art von Vandalismus (wie z.B. Einwirken mit Messer, Schraubenzieher etc.), Reinigungsvorgänge (wie z.B. Wasser, Reinigungsmittel), Verschmutzung und Umwelteinflüsse geschützt ist.

Diese Aufgabe wird erfindungsgemäß durch ein beleuchtetes Konstruktionselement gelöst, das die Merkmale des Anspruchs 1 umfasst.

Ferner liegt der Erfindung die Aufgabe zugrunde, ein Verfahren zu Herstellung eines Konstruktionselements zu schaffen, wobei die mit dem Verfahren hergestellten Konstruktionselemente gegen jegliche Art von Vandalismus (wie z.B. Einwirken mit Messer, Schraubenzieher etc.), Reinigungsvorgänge (wie z.B. Wasser, Reinigungsmittel), Verschmutzung und Umwelteinflüsse geschützt sind.

Diese Aufgabe wird erfindungsgemäß durch ein Verfahren zur Herstellung eines beleuchtbaren Konstruktionselements (gelöst, das die Merkmale des Anspruchs 10 umfasst.

Das erfindungsgemäße Konstruktionselement ist ein von innen her beleuchtetes Konstruktionselement. Das Konstruktionselement umfasst einen Hohlkörper, der sich entlang einer Längsachse erstreckt und im Hohlkörper mindestens eine Öffnung ausgebildet ist, die sich ebenfalls linear in Richtung der Längsachse erstreckt. Ein Träger, der zur Aufnahme einer Lichtleiste dient, ist von dem Hohlkörper umgeben. Die Lichtleiste ist mit entsprechender Elektronik bestückt, die zur Ansteuerung der Licht aussendenden Elemente dient. Bevorzugter Weise sind die Licht aussendenden Elemente LEDs, die Licht im sichtbaren Spektralbereich aussenden. Mittel der LEDs und in Verbindung mit der Elektronik kann jegliche Farbstimmung und jegliche Lichtanimation eingestellt werden.

Der Träger hat eine entsprechende Aufnahme ausgeformt, in die die Lichtleiste auf einem Boden der Aufnahme montiert ist. Analog zu den Öffnungen im Hohlkörper erstreckt sich die Aufnahme in Richtung der Längsachse des Hohlkörpers. Ferner besitzt die Aufnahme beidseits sich in Richtung der Längsachse erstreckende Flächenelemente, die mit einer Innenfläche des Hohlkörpers derart zusammenwirken, dass sich eine dichtende Wirkung in Richtung der Längsachse und parallel zu der mindestens einen Öffnung ergibt. Falls es aus konstruktiven Gründen erforderlich ist, kann die mindestens eine Öffnung auch durch das Zusammenwirken der Flächenelemente des Träger und der Innenfläche des Hohlkörpers allseitig abgedichtet sein. Die Aufnahme kann zur Abdichtung und zum Schutz mit einer ersten elastischen und transparenten Kunststoffmasse vergossen sein. Ebenso ist die mindestens eine Öffnung mit einer zweiten elastischen und transparenten Kunststoffmasse vergossen.

Bei einer besonders bevorzugten Ausführungsform ist die erste elastische und transparente Kunststoffmasse gleich der zweiten elastischen und transparenten Kunststoffmasse. Der Begriff "transparent" soll dabei bedeuten, dass die ausgehärteten Kunststoffmassen für das von der Lichtleiste ausgesendete Licht durchlässig sind. Für die flüssige und in der Regel aus zwei Komponenten bestehende Kunststoffmasse können Einstellungen derart gewählt werden, dass die ausgehärtete Kunststoffmasse trüb bis klar sein kann.

Kunststoffmasse. Nach dem Vergießen der Öffnungen des Hohlkörpers härtet die ursprünglich flüssige Kunststoffmasse aus, wodurch dann der Hohlkörper und der Träger irreversibel miteinander verbunden sind. Die erste elastische und transparente Kunststoffmasse und die zweite elastische und transparente Kunststoffmasse ist bevorzugt ein Polyurethan. Der Vorteil des Vergusses der Öffnungen des Hohlkörpers ist, dass das Konstruktionselement gegen jegliche Art von Vandalismus, Reinigungsvorgänge, Verschmutzung und Umwelteinflüsse geschützt ist. Zum einen lässt sich das vernetzte Polyurethan nicht aus den vergossenen Öffnungen entfernen. Ferner erhält das Konstruktionselement eine gute Haptik, da keine Unebenheiten oder hervorstehende Teile das Anfassen des Konstruktionselements stören. Hinzu kommt, dass das elastische Polyurethan bzw. die elastische Kunststoffmasse wirksam das Eindringen von Schmutz, Staub oder Feuchtigkeit etc. verhindert, da das elastische Material dicht an der Rändern der Öffnungen des Hohlkörpers anliegt.

Beim Befüllen der Öffnungen des Hohlkörpers mit der flüssigen Kunststoffmasse muss eine dichtende Wirkung gegeben sein, damit kein flüssiges Kunststoffmaterial in den Hohlkörper eindringt. Die Abdichtung zwischen den Flächenelementen der Aufnahme und der Innenfläche des Hohlkörpers wird durch eine Flächenpassung erreicht.

Eine andere Möglichkeit ist, dass zwischen den Flächenelementen der Aufnahme und der Innenfläche des Hohlkörpers beidseitig zu den Öffnungen jeweils ein in Richtung der Längsachse verlaufendes Dichtelement vorgesehen ist. Die Dichtelemente bilden somit eine erforderliche Abdichtung, damit das Befüllen der Öffnungen des Hohlkörpers mit der flüssigen Kunststoffmasse ohne ein Auslaufen der Kunststoffmasse in den Hohlkörper durchgeführt werden kann.

Zusätzlich kann ein mit einer gewissen Druckkraft beaufschlagter Kontakt zwischen den Flächenelementen der Aufnahme und der Innenfläche des Hohlkörpers z.B. durch die Verwendung von allgemein bekannten Druckstücken hergestellt werden. Hierzu sind mehrere federnde Druckstücke zwischen einer Unterseite des Trägers und der Innenfläche des Hohlkörpers vorgesehen. Dadurch wird der Träger in Richtung der Öffnungen des Hohlkörpers mit der Druckkraft beaufschlagt.

Das Konstruktionselement kann als ein Griffelement ausgestaltet sein. Das Griffelement kann z.B. in Transportmitteln des öffentlichen Nahverkehrs eingesetzt werden. Das Griffelement kann als Handgriff ausgebildet sein, der mindestens eine Halterung zur Befestigung des Handgriffs an einer Wand eines des Verkehrsmittels umfasst.

Der Hohlkörper des Konstruktionselements, das z.B. ein Griffelement, ein Handgriff, ein Hinweiselement etc. sein kann, eine kann aus Kunststoff oder Metall bestehen. Gerade beim Einsatz des Konstruktionselements als Griffelement oder Handgriff in öffentlichen Bereichen (Plätzen, Fahrzeugen zur Personenbeförderung etc.) kann der Hohlkörper bevorzugt aus Edelstahl bestehen.

Das erfindungsgemäße Verfahren zur Herstellung eines beleuchtbaren Konstruktionselements zeichnet sich dadurch aus, dass zunächst eine Lichtleiste, die mit einer Vielzahl von Licht emittierenden Elementen bestückt ist, auf einen Boden einer Aufnahme eines Trägers gesetzt wird. Anschließend wird die Aufnahme mit einer ersten elastischen und transparenten Kunststoffmasse derart vergossen, dass die erste Kunststoffmasse bis zu einem Niveau von Flächenelementen des Trägers oder leicht darunter reicht. Die erforderliche Menge für die erste Kunststoffmasse errechnet sich aus dem durch die Aufnahme zur Verfügung stehenden freien Volumen. Diese exakte Menge wird in die Aufnahme des Trägers gefüllt.

Der so bearbeitete Träger wird in einen Hohlkörper des Konstruktionselements eingesetzt. Dabei wirken die in Richtung einer Längsachse des Konstruktionselements sich erstreckenden Flächenelemente des Trägers mit einer Innenfläche des Hohlkörpers dichtend zusammen. Ebenso kommt die erste Kunststoffmasse hinter mindestens einer Öffnung bzw. der mehreren Öffnungen des Konstruktionselements zu liegen. Abschließend wird eine zweite elastische und transparente Kunststoffmasse, in die mindestens eine Öffnung des Konstruktionselements gefüllt. Es ist für einen Fachmann selbstverständlich, das der Form, Größe und Anzahl der Öffnungen keine Grenzen gesetzt sind. Auch hier wird die erforderliche Menge für die zweite Kunststoffmasse aus dem Volumen der einzelnen Öffnungen des Konstruktionselements errechnet. Das Volumen einer Öffnung ist im Wesentlichen durch die Wandstärke des Konstruktionselements und die Fläche der Öffnung bestimmt. In jede Öffnung wird dann die exakte Menge des zweiten Kunststoffmaterials gefüllt, damit die Öffnung exakt bis zur Oberfläche des Konstruktionselements gefüllt ist. Die dichtende Wirkung zwischen den Flächenelementen der Aufnahme und der Innenfläche des Hohlkörpers sorgt dafür, dass das zweite Kunststoffmaterial nicht auch den Öffnungen in das Innere des Konstruktionselements laufen kann.

Das Konstruktionselement ist ebenfalls nicht auch die in der Beschreibung der Erfindung offenbarten Querschnittsformen beschränkt. Zur Unterstützung des dichtenden Kontakts des Trägers und der der Innenfläche des Hohlkörpers, können mehrere elastische Elemente zwischen einer Unterseite des Trägers und der Innenfläche des Hohlkörpers vorgesehen werden. Diese elastischen Elemente üben somit eine Druckkraft in Richtung der Öffnungen des Hohlkörpers aus.

Das erfindungsgemäße Konstruktionselement hat den Vorteil, dass die Öffnungen des Konstruktionselements, durch die Licht aus dem Inneren des Konstruktionselements austreten kann durch die zweite Kunststoffmasse gegen jegliche Art von Umwelteinflüssen und gegen Vandalismus geschützt sein. Insbesondere dichtet die zweite Kunststoffmasse die Ränder der Öffnungen sicher und dauerhaft ab.

Im Folgenden sollen Ausführungsbeispiele die Erfindung und ihre Vorteile anhand der beigefügten Figuren näher erläutern. Die Größenverhältnisse in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Dabei zeigen:
- **Figur 1**: eine Draufsicht auf einen Teil des erfindungsgemäßen Konstruktionselements;
- **Figur 2**: eine Querschnittsansicht einer möglichen Ausführungsform des Konstruktionselements, das als Griffelement ausgebildet ist entlang der in Fig. 1 mit B-B gekennzeichneten Schnittlinie;
- **Figur 3**: eine Querschnittsansicht einer weiteren möglichen Ausführungsform des Konstruktionselements, das als Griffelement ausgebildet ist, entlang der in Fig. 1 mit B-B gekennzeichneten Schnittlinie;
- **Figur 4**: eine vergrößerte Darstellung des in Fig. 2 mit K gekennzeichneten Bereichs;
- **Figur 5**: eine vergrößerte Darstellung einer anderen Ausführungsform des in Fig. 2 mit K gekennzeichneten Bereichs;
- **Figur 6**: eine Draufsicht auf die Lichtaustrittsöffnungen des erfindungsgemäßen Konstruktionselements, das als Handgriff ausgebildet ist;
- **Figur 7**: eine Seitenansicht des an einem Wandelements eines Fahrzeugs montierten, erfindungsgemäßen Konstruktionselements, das als Handgriff ausgebildet ist;
- **Figur 8**: eine Draufsicht auf einen Teil einer weiteren Ausführungsform des erfindungsgemäßen Konstruktionselements;
- **Figur 9**: eine Draufsicht auf eine noch weitere Ausführungsform des erfindungsgemäßen Konstruktionselements;
- **Figur 10**: eine Querschnittsansicht entlang der in Fig. 8 mit B-B gekennzeichneten Schnittlinie, wobei eine mögliche Ausführungsform des inneren Aufbaus des Konstruktionselements dargestellt ist;
- **Figur 11**: eine Querschnittsansicht entlang der in Fig. 8 mit B-B gekennzeichneten Schnittlinie, wobei eine mögliche weitere Ausführungsform des inneren Aufbaus des Konstruktionselements dargestellt ist; und
- **Figur 12**: eine Querschnittsansicht des erfindungsgemäßen Trägers, der für dein Einsatz in der Hohlkörper der in den Figuren 8 und 9 dargestellten Ausführungsformen des Konstruktionselements geeignet ist.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figuren erforderlich sind.

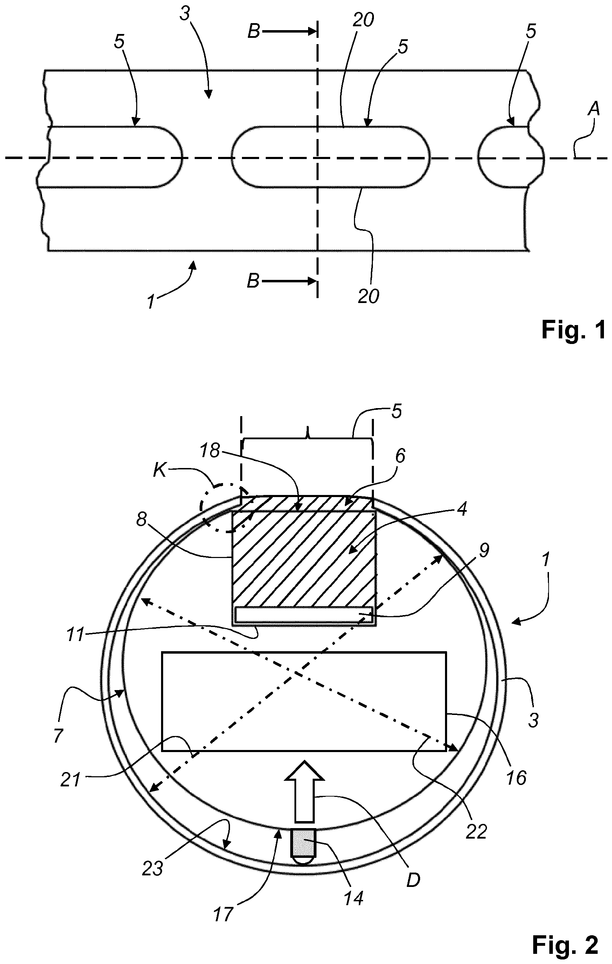

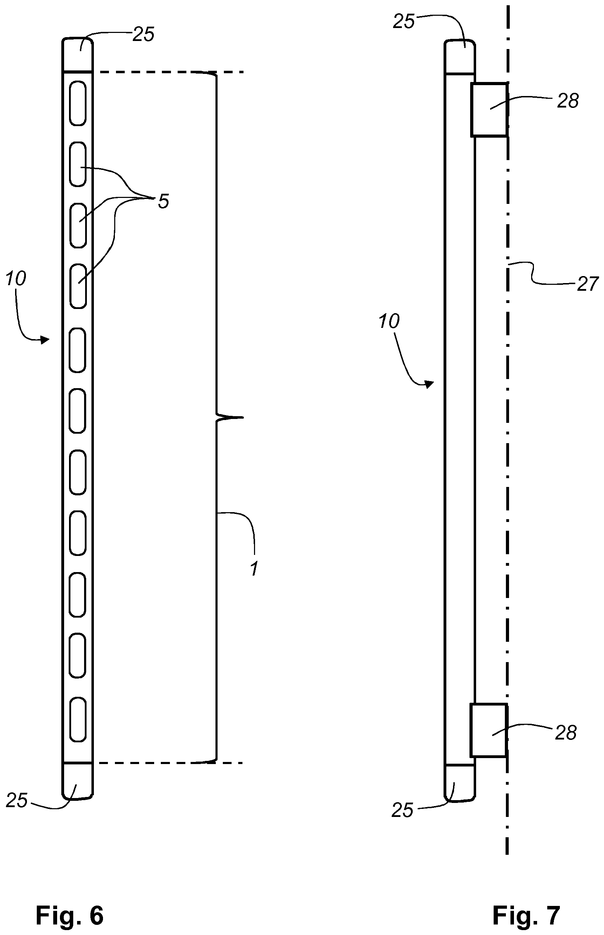

**Figur 1** ist eine schematische Draufsicht auf einen Teil des erfindungsgemäßen und von innen her beleuchteten Konstruktionselements 1. Das Konstruktionselement 1 weist einen in Richtung der Längsachse A langgestreckten Hohlkörper 3 auf, der das Innenleben (nicht dargestellt) des Hohlkörpers 3 umschließt. In der hier dargestellten Ausführungsform sind entlang der Längsachse A mehrere Öffnung 5 im Hohlkörper 3 ausgebildet. Bei dieser Ausführungsform besitzen die Öffnungen 5 zwei parallele Seiten 20, die ebenfalls parallel zur Längsachse A ausgerichtet sind. Durch die Öffnungen 5 kann das im Inneren des Hohlkörpers 3 erzeugte Licht austreten. Beispielsweise kann ein Handgriff 10 (siehe Fig. 6 und 7), der das erfindungsgemäße Konstruktionselement 1 verwendet, die Orientierung von Fahrgästen beim Ausstieg aus einem Fahrzeug zur Personenbeförderung erleichtern. Es ist für einen Fachmann selbstverständlich, dass die hier dargestellte Anzahl, Form, Ausrichtung und Größe der Öffnungen 5 keine Beschränkung der Erfindung darstellt.

Die Darstellung der **Figur 2** zeigt eine Querschnittsansicht einer möglichen Ausführungsform des Konstruktionselement 1 entlang der in Fig. 1 mit B-B gekennzeichneten Schnittlinie. In den Hohlkörper 3 ist ein ist eine Träger 7 eingeschoben. In seiner Endposition im Hohlkörper 3 wird der Träger 7 mittels mehrerer Druckstücke 14 in Richtung der Öffnungen 5 des Hohlkörpers 3 mit einer Druckkraft D beaufschlagt. Bei der hier dargestellten Ausführungsform hat der Hohlkörper 3 eine im Wesentlichen kreisförmige Querschnittsform. Ebenso besitzt der Träger 7 eine im Wesentlichen kreisförmige Querschnittsform. Ein innerer Durchmesser 21 des Hohlkörpers 3 ist größer als ein äußerer Durchmesser 22 des Trägers 7. In der kreisförmigen Querschnittsform des Trägers 7 ist eine Aufnahme 8 ausgebildet. Die Aufnahme 8 hat bei dieser Ausführungsform eine im Wesentlichen U-förmige Querschnittsform. Die Aufnahme 8 erstreckt sich ebenfalls in Richtung der Längsachse A des Konstruktionselements 1 . Auf einem Boden 11 der Aufnahme 8 ist eine Lichtleiste 9 montiert. Die Lichtleiste ist mit entsprechender Elektronik und einer Vielzahl von Licht aussendenden Elementen bestückt. Die Elektronik und die Licht aussendenden Elemente sind Stand der Technik und der Einfachheit halber nicht dargestellt. Bevorzugter Weise sind die Licht aussendenden Elemente LEDs. Um eine ausreichend gute Ableitung der durch die Licht aussendenden Elemente erzeugten Wärme zu gewährleisten, ist der Träger 7 aus einem gut wärmeleitenden Material, wie z.B. Aluminium, hergestellt. Ferner kann im Träger 7 noch ein Hohlraum 16 ausgebildet sein, die für einen Abtransport der bei der Beleuchtung entstehenden Wärme sorgen kann.

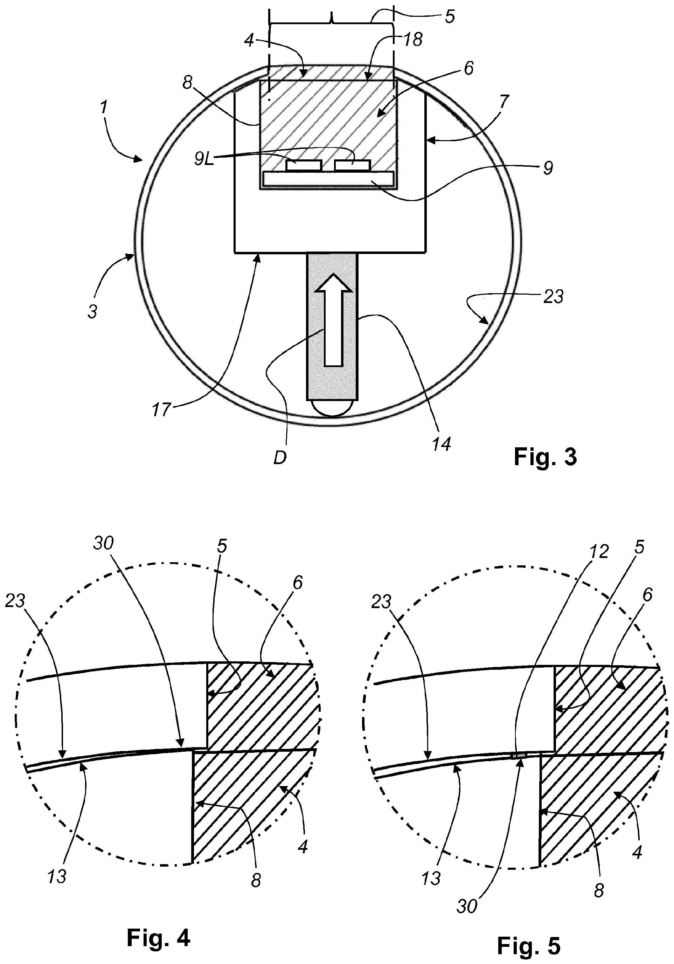

Nach der Montage der Lichtleiste 9 am Boden 11 der Aufnahme 8, wird die Aufnahme mit einer ersten Kunststoffmasse 4 vergossen. Die erste Kunststoffmasse 4 besteht aus zwei Komponenten, die bereits gemischt in die Aufnahme 8 gefüllt wird. Die erste Kunststoffmasse 4 härtet aus und bildet ein Elastomer, der die Aufnahme 8 hermetisch abschließt. Das Elastomer ist transparent und der Grad der Transparenz (trüb bis klar) kann durch das Mischverhältnis der zwei Komponenten eingestellt werden. Die erste Kunststoffmasse 4 kann bis zu einer Oberkante 18 oder etwas unterhalb dieser Oberkannte 18 reichen. Für den Fall, dass die erste Kunststoffmasse 4 etwa 2 - 3 mm tiefer als die Oberkannte 18 liegt, hat dies den Vorteil, dass eine verbesserte Haftung zwischen dem Träger 7 und dem Hohlkörper 3 resultiert. Nach dem Aushärten der ersten Kunststoffmasse 4 kann der Träger 7 in den Hohlkörper 3 eingeschoben und positioniert werden. Bevorzugter Weise sind mehrere federnde Druckstücke 14 zwischen einer Unterseite 17 des Trägers 7 und der Innenfläche 23 des Hohlkörpers 3 vorgesehen. Die Druckstücke 14 üben somit auf den Träger 7 in Richtung der Öffnungen 5 des Hohlkörpers 3 eine Druckkraft D aus. Mittels der Druckkraft D wird der Träger 7 im Bereich der Oberkante 18 der Aufnahme 8 gegen die Innenfläche 23 des Hohlkörpers 3 gedrückt. Es ist für einen Fachmann selbstverständlich, dass auch anderer Montagtechniken als die mit den Druckstücken14 denkbar sind. Letztendlich gilt es eine Abdichtung der Öffnungen 5 des Hohlkörpers 3 zum Inneren des Hohlkörpers 3 zu erzielen. Die Abdichtung zwischen Träger 7 und der Innenfläche 23 des Hohlkörpers 3 ist besonders wichtig, damit beim Einfüllen der zweiten Kunststoffmasse 6 in die Öffnungen 5 des Hohlkörpers 3, diese nicht in den Hohlkörper 3 gelangt. Die Abdichtung ist im Wesentlichen parallel zur den Öffnungen 5 in der Längsachse A des Hohlkörpers 3 ausgerichtet. Zwei mögliche Ausführungsformen der Abdichtung sind in den Figuren 4 und 5 dargestellt.

Nach der Montage des Trägers 7 im Hohlkörper 3 werden die Öffnungen 5 des Hohlkörpers 3 mit einer zweiten Kunststoffmasse 6 verfüllt. Die zweite Kunststoffmasse 6 besteht ebenfalls aus zwei Komponenten, die bereits gemischt in die Öffnung 5 gefüllt werden. Die Öffnungen 5 des Hohlkörpers 3 sind zum Inneren des Hohlkörpers 3 durch die Oberkante 18 der ersten Kunststoffmasse 4 in der Aufnahme 8 begrenzt. Die zweite Kunststoffmasse 6 härtet in den Öffnungen 5 aus und bildet ein Elastomer, das die Öffnungen 5 hermetisch abschließen. Durch das ausgehärtete Elastomer sitzt der Träger 7 irreversible im Hohlkörper 3.

Bevorzugter Weise sind die erste Kunststoffmasse 4 und die zweite Kunststoffmasse 6 identisch. Als Kunststoffmasse sind gieß- und vernetzbare Elastomere verwendbar, die im Wesentlichen im sichtbaren Spektralbereich transparent sind. Ein bevorzugtes Elastomer ist ein Polyurethan. Ebenso sind Elastomere auf Silikonbasis denkbar.

**Figur 3** zeigt eine Querschnittsansicht einer weiteren möglichen Ausführungsform des Griffelements entlang der in Fig. 1 mit B-B gekennzeichneten Schnittlinie. Der Träger 7 ist in dieser Ausführungsform in Form einer Leiste ausgebildet. Analog zur Beschreibung zur Figur 2 ist die Aufnahme 8 in dem Träger 7 ausgebildet und die Lichtleiste 9 ist zusammen mit Licht emittierenden Elementen 9L in der Aufnahme 8 platziert. Bevorzugter Weise sind auch hier mehrere elastische Elemente 14 (hier federnde Druckstücke) zwischen einer Unterseite 17 des Trägers 7 und der Innenfläche 23 des Hohlkörpers 3 vorgesehen. Die elastischen Elemente Druckstücke 14 üben somit auf den Träger 7 in Richtung der Öffnungen 5 des Hohlkörpers 3 eine Druckkraft D aus. Mittels der Druckkraft D wird der Träger 7 im Bereich der Oberkante 18 der Aufnahme 8 gegen die Innenfläche 23 des Hohlkörpers 3 gedrückt. Die Befüllung der Aufnahme 8 und der Öffnungen 5 mit der ersten Kunststoffmasse 4 bzw. der zweiten Kunststoffmasse 6 ist in der Beschreibung zu Figur 2 bereits hinreichend beschrieben, so dass hier unnötige Wiederholungen vermieden werden.

**Figur 4** zeigt eine vergrößerte Darstellung des in Fig. 2 mit K gekennzeichneten Bereichs, der eine mögliche Ausführungsform der Abdichtung 30 zwischen dem Träger 7 und der Innenfläche 23 des Hohlkörpers 3 darstellt. Die Abdichtung zwischen dem Träger 7 und der Innenfläche 23 des Hohlkörpers 3 wird durch eine Flächenpassung zwischen der Innenfläche 23 des Hohlkörpers 3 und entsprechenden Flächenelementen 13 im in Bereich der Aufnahme 8. Wie bereits erwähnt erstreckt sich die dichtende Wirkung der Abdichtung 30 in Richtung der Längsachse A parallel zu den Öffnungen 5 des Konstruktionselements 1.

**Figur 5** zeigt eine vergrößerte Darstellung einer anderen Ausführungsform des in Fig. 2 mit K gekennzeichneten Bereichs. Hier ist zwischen den Flächenelementen 13 im Bereich der Aufnahme 8 und der Innenfläche 23 des Hohlkörpers 3 ein Dichtelement 12 vorgesehen. Jeweils ein Dichtelement 12 verläuft zu je einer Seite der Öffnungen 5 parallel in Richtung der Längsachse A des Griffelements 1.

**Figur 6** zeigt eine Draufsicht auf die Lichtaustrittsöffnungen 5 des erfindungsgemäßen Konstruktionselements 1. Das Konstruktionselement ist Teil eines Handgriffs 10, der aus dem Konstruktionselement 1 (Griffelement) besteht, das mit zwei Endkappen 25 versehen ist.

**Figur 7** zeigt eine Seitenansicht des an einem Wandelement 27 eines Fahrzeugs (nicht dargestellt) montierten Handgriffs 10. Hierzu ist der Handgriff 10 mit zwei Halterungen 28 versehen.

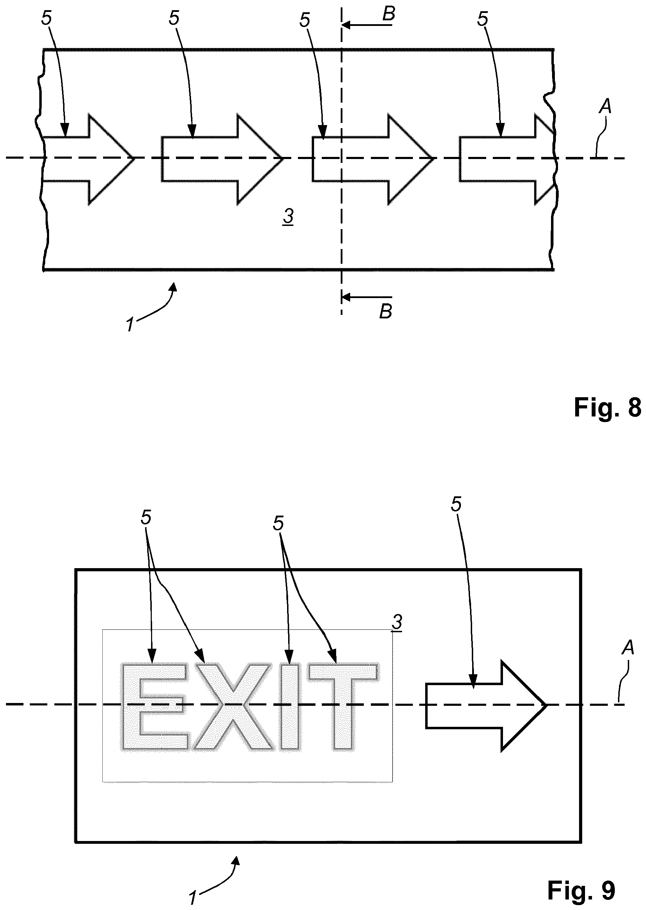

**Figur 8** zeigt Draufsicht auf einen Teil einer weiteren Ausführungsform des erfindungsgemäßen Konstruktionselements 1. Das Konstruktionselement 1 weist einen in Richtung der Längsachse A langgestreckten Hohlkörper 3 auf. In der hier dargestellten Ausführungsform sind entlang der Längsachse A mehrere Öffnung 5 in Form von Pfeilen ausgebildet. Durch die Öffnungen 5 kann das im Inneren des Hohlkörpers 3 erzeugte Licht austreten. Bei bewegten Lichteffekten kann man mit dieser Ausführungsform des Konstruktionselements 1 kann man Personen gezielt mit Lichtsignalen führen.

**Figur 9** zeigt eine Draufsicht auf eine noch weitere Ausführungsform des erfindungsgemäßen Konstruktionselements 1.Bei dieser Ausführungsform sind die Öffnungen 5 in Form einer Schrift und eines Pfeils dargestellt. Durch die Öffnungen 5 kann das im Inneren des Hohlkörpers 3 erzeugte Licht austreten.

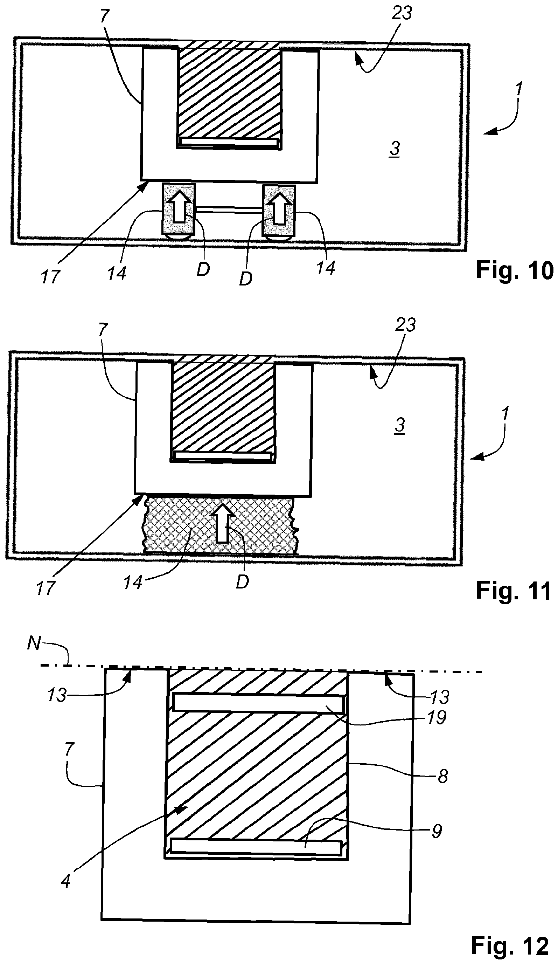

**Figur 10** zeigt eine Querschnittsansicht entlang der in Fig. 8 mit B-B gekennzeichneten Schnittlinie, wobei eine mögliche Ausführungsform des inneren Aufbaus des Konstruktionselements 1 dargestellt ist. Der Träger 7 wird durch die elastischen Elemente 14, die zwischen einer Unterseite 17 des Trägers 7 und der Innenfläche 23 des Hohlkörpers 3 vorgesehen, gegen die Innenfläche 23 des Hohlkörpers 3 des Konstruktionselements 1 gedrückt. Die elastischen Elemente 14 sind als Druckstücke ausgebildet und üben somit auf den Träger 7 in Richtung der Öffnungen 5 des Hohlkörpers 3 eine Druckkraft D aus.

**Figur 11** zeigt eine Querschnittsansicht entlang der in Fig. 8 mit B-B gekennzeichneten Schnittlinie, wobei eine mögliche weitere Ausführungsform des inneren Aufbaus des Konstruktionselements 1 dargestellt ist. Der Träger 7 wird durch mindestens ein elastisches Element 14, das zwischen einer Unterseite 17 des Trägers 7 und der Innenfläche 23 des Hohlkörpers 3 vorgesehen, gegen die Innenfläche 23 des Hohlkörpers 3 des Konstruktionselements 1 gedrückt. Das mindesten eine elastische Element 14 kann in Form eines dauerelastischen Kunststoffs oder eines quellenden Kunststoffs ausgebildet sein, der somit auf den Träger 7 in Richtung der Öffnungen 5 des Hohlkörpers 3 eine Druckkraft D ausübt.

**Figur 12** zeigt eine Querschnittsansicht des erfindungsgemäßen Trägers 7, der für dein Einsatz in den Hohlraum 16 der in den Figuren 8 und 9 dargestellten Ausführungsformen des Konstruktionselements 1 geeignet ist. Das Konstruktionselement 1 besitzt bei diesen Ausführungsformen einen quaderförmigen Querschnitt. Folglich sind die Flächenelemente 13 des Trägers 7 derart ausgebildet, dass sie an der Innenfläche 23 des Konstruktionselements 1 formschlüssig anliegen. Die Aufnahme 8 ist mit der ersten Kunststoffmasse 4 gefüllt. Neben der mindesten einen Lichtleiste 9 ist in die erste Kunststoffmasse 4 ein optisches Element 19 eingebettet, das eine homogene Lichtführung ermöglicht und Streuung reduziert. Wie in Figur 12 dargestellt ist es immer erforderlich, dass die Aufnahme 8 des Trägers 7 bis zu einem Niveau der Flächenelemente 9 des Trägers 7 oder nur geringfügig darunter gefüllt ist. Nur so kann beim Verfüllen der Öffnungen 5 mit der zweiten Kunststoffmasse eine genaue Berechnung des Volumens der Öffnungen 5 gegeben sein.

Die Erfindung wurde in Bezug auf bevorzugte Ausführungsformen beschrieben. Es ist für einen Fachmann jedoch selbstverständlich, dass Änderungen und Abwandlungen gemacht werden können, ohne dabei den Schutzbereich der nachstehenden Schutzansprüche zu verlassen.

### Bezugszeichenliste

- 1: Konstruktionselement
- 3: Hohlkörper
- 4: erste Kunststoffmasse
- 5: Öffnung
- 6: zweite Kunststoffmasse
- 7: Träger
- 8: Aufnahme
- 9: Lichtleiste
- 9L: Licht emittierende Elemente
- 10: Handgriff
- 11: Boden
- 12: Dichtelement
- 13: Flächenelemente
- 14: Druckstück
- 16: Hohlraum
- 17: Unterseite
- 18: Oberkante
- 19: optisches Element
- 20: Seiten
- 21: innerer Durchmesser
- 22: äußerer Durchmesser
- 23: Innenfläche
- 25: Endkappe
- 27: Wandelement
- 28: Halterung
- 30: Abdichtung
- A: Längsachse
- B-B: Schnittlinie
- D: Druckkraft
- K: Bereich
- N: Niveau

## Patentansprüche

1. Beleuchtetes Konstruktionselement (1) mit einem Hohlkörper (3), der sich entlang einer Längsachse (A) erstreckt, wobei ebenfalls in Richtung der Längsachse (A) mindesten eine Öffnung (5) im Hohlkörper (3) ausgebildet ist, **gekennzeichnet durch**
• einen Träger (7) zur Aufnahme mindestens einer Lichtleiste (9), die mit einer Vielzahl von Licht emittierenden Elementen (9L) bestückt ist;
• einer Aufnahme (8), die ein Teil des Trägers (7) ist, in der die Lichtleiste (9) auf einen Boden (11) der Aufnahme (8) montiert ist, wobei die Aufnahme (8) sich in Richtung der Längsachse (A) erstreckende Flächenelemente (13) aufweist, die mit einer Innenfläche (23) des Hohlkörpers (3) derart zusammenwirken, dass sich eine dichtende Wirkung in Richtung der Längsachse (A) parallel zu der mindestens einen Öffnung (5) ergibt;
• einer ersten elastischen und transparenten Kunststoffmasse (4), mit der die Aufnahme (8) vergossen ist, und
• einer zweiten elastischen und transparenten Kunststoffmasse (6), mit der die mindestens eine Öffnung (5) der vergossen ist und stoffschlüssig mit der ersten elastischen und transparenten Kunststoffmasse (4) zusammenwirkt.

2. Beleuchtetes Konstruktionselement (1) nach Anspruch 1, wobei die erste elastische und transparente Kunststoffmasse (4) gleich der zweiten elastischen und transparenten Kunststoffmasse (6) ist.

3. Beleuchtetes Konstruktionselement (1) nach einem der vorangehenden Ansprüche, wobei die dichtende Wirkung einer Abdichtung (30) zwischen den Flächenelementen (13) der Aufnahme (8) und der Innenfläche (23) des Hohlkörpers (3) eine Flächenpassung ist.

4. Beleuchtetes Konstruktionselement (1) nach einem der vorangehenden Ansprüche 1 bis 3, wobei zwischen den Flächenelementen (13) der Aufnahme (8) und der Innenfläche (23) des Hohlkörpers (3) beidseitig zu den Öffnungen (5) jeweils ein in Richtung der Längsachse (A) verlaufendes Dichtelement (12) vorgesehen ist, das die eine Abdichtung (30) bildet.

5. Beleuchtetes Konstruktionselement (1) nach einem der vorangehenden Ansprüche, wobei mehrere elastische Elemente (14) zwischen einer Unterseite (17) des Trägers (7) und der Innenfläche (23) des Hohlkörpers (3) vorgesehen sind, die den Träger (7) in Richtung der Öffnungen (5) des Hohlkörpers (3) mit einer Druckkraft (D) beaufschlagen.

6. Beleuchtetes Konstruktionselement (1) nach Anspruch 5, wobei die mehreren elastischen Elemente (14) federnde Druckstücke (14) sind.

7. Beleuchtetes Konstruktionselement (1) nach Anspruch 5, wobei die mehreren elastischen Elemente (14) aus einem quellbaren Kunststoff bestehen.

8. Beleuchtetes Konstruktionselement (1) nach einem der vorangehenden Ansprüche, wobei nach einer Aushärtung der in den Öffnungen (5) befindlichen zweiten und flüssigen Kunststoffmasse (6) der Träger (7) irreversibel mit dem Hohlkörper (3) verbunden ist.

9. Beleuchtetes Konstruktionselement (1) nach einem der vorangehenden Ansprüche, wobei, der Hohlkörper (3) aus Metall oder einem Kunststoff besteht.

10. Verfahren zur Herstellung eines beleuchtbaren Konstruktionselements (1) umfassend die folgenden Schritte:
• dass eine Lichtleiste (9), die mit einer Vielzahl von Licht emittierenden Elementen (9L) bestückt ist, auf einen Boden (11) einer Aufnahme (8) eines Trägers (7) gesetzt wird,
• dass die Aufnahme (8) mit einer ersten elastischen und transparenten Kunststoffmasse (4) derart vergossen wird, dass die erste Kunststoffmasse (4) bis zu einem Niveau (N) von Flächenelementen (13) desTrägers (7) oder leicht darunter reicht;
• dass der Träger (7) in einen Hohlkörper (3) des Konstruktionselements (1) eingesetzt wird, dass die sich in Richtung einer Längsachse (A) des Konstruktionselements (1) erstreckenden Flächenelemente (13) des Trägers (7) mit einer Innenfläche (23) des Hohlkörpers (3) dichtend zusammenwirkt und die erste Kunststoffmasse (4) hinter mindestens einer Öffnung (5) des Konstruktionselements (1) zu liegen kommt; und
• dass eine zweite elastische und transparente Kunststoffmasse (6), in die mindestens eine Öffnung (5) des Konstruktionselements (1) gefüllt wird.

11. Verfahren nach Anspruch 10, wobei die dichtende Wirkung der Flächenelemente (13) des Trägers (7) mit der Innenfläche (23) des Hohlkörpers (3) durch eine Flächenpassung zwischen den Flächenelementen (13) der Aufnahme (8) und der Innenfläche (23) des Hohlkörpers (3) oder durch ein beidseitig zu den Öffnungen (5) in Richtung einer Längsachse (A) des Konstruktionselements (1) verlaufendes Dichtelement (12) erreicht wird.

12. Verfahren nach einem der vorangehenden Ansprüche 10 bis 11, wobei mehrere elastische Elemente (14) zwischen einer Unterseite (17) des Trägers (7) und der Innenfläche (23) des Hohlkörpers (3) vorgesehen werden, so dass der Träger (7) in Richtung der Öffnungen (5) des Hohlkörpers (3) mit einer Druckkraft (D) beaufschlagt wird.
